(19)

Europäisches
Patentamt
European
Patent Office
Office européen
des brevets

(11)  **EP 4 012 072 A1**

(12)  **EUROPEAN PATENT APPLICATION**

(43) Date of publication:
**15.06.2022   Bulletin 2022/24**

(21) Application number: **21205368.0**

(22) Date of filing: **28.10.2021**

(51) International Patent Classification (IPC):
**C25B 9/19** *(2021.01)*      **C25B 13/08** *(2006.01)*
**H01M 8/00** *(2016.01)*      **B01D 67/00** *(2006.01)*

(52) Cooperative Patent Classification (CPC):
**C25B 13/08; B01D 61/42; B01D 67/0009;**
**B01D 69/10; B01D 69/12; B01D 71/60;**
**B01D 71/82; C25B 9/19; H01M 8/00**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:   **09.12.2020   KR 20200171530**

(71) Applicant: **Korea Institute of Science and**
**Technology**
**Seoul 02792 (KR)**

(72) Inventors:
 • **HENKENSMEIER, Dirk**
  **Seoul (KR)**
 • **JANG, Jong Hyun**
  **Seoul (KR)**

 • **PARK, Hyun S.**
  **Seoul (KR)**
 • **PARK, Hee-Young**
  **Seoul (KR)**
 • **KIM, Hyoung-Juhn**
  **Seoul (KR)**
 • **LEE, So Young**
  **Seoul (KR)**
 • **MUHAMMAD, Luthfi Akbar Trisno**
  **Seoul (KR)**
 • **SEO, Bora**
  **Seoul (KR)**
 • **HAN, Jonghee**
  **Seoul (KR)**

(74) Representative: **advotec.**
**Patent- und Rechtsanwaltspartnerschaft**
**Tappe mbB**
**Widenmayerstraße 4**
**80538 München (DE)**

(54)  **METHOD OF PREPARING HYDROXIDE ION CONDUCTIVE PBI MEMBRANE**

(57)    The present invention relates to a method of preparing a hydroxide ion conductive PBI membrane, and use of the membrane prepared thereby.

[FIG. 1]

(a)      (b)      (c)

EP 4 012 072 A1

**Description**

**[Technical Field]**

The present invention relates to a method of preparing a hydroxide ion conductive PBI membrane, and use of the membrane prepared thereby.

**[Background Art]**

Korea's hydrogen road map from January 2019 predicts that Korean car makers will produce 6.2 million fuel cell cars, and overall, 17.1 GW of fuel cells are to be installed in Korea by 2040. These systems require hydrogen fuel, which can ultimately be produced by way of water electrolysis powered by green energy sources. To reach this goal, advanced water electrolysis systems are necessary.

There are four types of electrolyzer technology that are commercially available or actively being developed. These are alkaline water electrolysis, proton exchange membrane (PEM) water electrolysis, solid oxide electrolysis, and alkaline anion exchange membrane water electrolysis, which combines advantages of PEM and alkaline electrolysis.

An alkaline electrolyzer (AEC) is a traditional technology constructed from inexpensive materials but which operates at a low hydrogen production rate with moderate energy efficiency. It has also poor dynamic load performance, making it unsuitable for integration with intermittent renewable power sources. These shortcomings have encouraged development of PEM electrolyzers (PEMEC), which are capable of production at a high rate and high pressure with higher energy efficiency and faster load response. However, the PEM electrolyzers are expensive due to use of noble metals and expensive internal coatings for current collectors and transport layers. It is clear that upscaling to meet global needs with electrolyzers alone is not a possible solution. This is not only a cost issue, but in particular, it is a consequence of the very limited resources for iridium, which is the only choice of material for the oxygen catalyst. It is estimated that the annual production of iridium is enough for the production of about 10 GW to 20 GW of electrolyzers depending on the catalyst loading and the scale of precious metal recycling.

Alkaline anion exchange membrane electrolyzers represent an ideal electrolyzer system, but so far suffer from poor alkaline stability of most anion exchange membranes, and there is a need to develop a hydroxide ion conductive polymeric binder system for the electrodes.

Traditional diaphragm systems were based on asbestos, and following the legal ban of asbestos, were changed into polymeric diaphragms. The most prominent commercial materials are AGFA's Zirfon membrane and polyphenylene sulfide (PPS) fabric. Both materials are relatively thick (>500 m) and have a high area resistance (>0.25 $\Omega \cdot cm^2$):

a) AGFA Zirfon: 500 $\mu$m; 0.25 $\Omega \cdot cm^2$ @RT, 0.12 $\Omega \cdot cm^2$ @70°C; bubble point >2 bar,
b) PPS fabric: 900 $\mu$m; 0.34 $\Omega \cdot cm^2$ @70°C; bubble point 0.1 bar.

Both materials are porous materials, and therefore, there is a risk of a gas leaking when high differential pressures are applied or occur accidentally.

**[Prior Art Documents]**

**[Patent Document]**

Korean Patent No. 10-1293196 (Publication Date: October 19, 2012)

**[Disclosure]**

**[Technical Problem]**

The present inventors researched and made intensive efforts to develop an optimized method of producing a PBI thin film with excellent performance, which is applicable to various electrochemical systems such as alkaline water electrolyzers, and as a result, they have found that when a PBI membrane is cast from a PBI solution dissolved in phosphoric acid, instead of a traditional PBI membrane cast from a PBI solution dissolved in a dimethylacetamide (DMAc) solution, and this is then immersed in a KOH solution to be doped with KOH, performance such as conductivity, *etc.* may be remarkably improved, thereby completing the present invention.

**[Technical Solution]**

The present invention will be described in detail as follows. Meanwhile, each description and embodiment disclosed in this disclosure may also be applied to other descriptions and embodiments. That is, all combinations of various elements disclosed in this disclosure fall within the scope of the present invention. Further, the scope of the present invention is not limited by the specific description described below.

A first aspect of the present invention provides a method of preparing a hydroxide ion conductive membrane, the method comprising: a step 1 of preparing a membrane from a solution of polymer comprising one or more amino groups in the backbone, which are dissolved in a phosphoric acid solution; and a step 2 of immersing the membrane in a potassium hydroxide solution.

For example, the polymer solution may be prepared by adding a polymer to a phosphoric acid solution, heating the solution at 170°C to 220°C, and completing dissolving the polymer under stirring at a high temperature for 12 hours to 36 hours. However, the method is not limited thereto, as long as it may provide a solution in which the polymer is completely dissolved.

The step 1 may be achieved by pouring the polymer solution on a plate, e.g., a glass plate heated at 50°C to 70°C, and solidifying the same by casting using a doctor blade, *etc.,* but is not limited thereto. In this regard, the membrane to be prepared may have a thickness of 300 $\mu$m to 1000 $\mu$m, but is not limited thereto.

For example, the phosphoric acid solution may have a concentration of 50 wt% to 115 wt%, but is not limited thereto.

The step 2 may be achieved by immersing the membrane prepared in the previous step in an aqueous potassium hydroxide solution, and equilibrating the membrane at 10°C to 40°C, for example, at room temperature for 12 hours to 36 hours, but is not limited thereto.

For example, the potassium hydroxide solution may have a concentration of 1 wt% to 50 wt%, but is not limited thereto.

For example, after the step 1, a step 1-1 of washing with water in order to remove excess acid may be further comprised, but is not limited thereto. The step 1-1 may be achieved by immersing the membrane in deionized water and maintaining the membrane therein for 24 hours or more, but is not limited thereto. In this regard, the step may be performed by replacing with fresh water three or four times, but is not limited thereto.

The preparation method of the present invention may be characterized by not comprising a step of drying between the step 1-1 and the step 3. Rather, when the step of drying was additionally performed after washing, slightly unfavorable effects were observed.

For example, the polymer comprising amino groups in the backbone may be a polybenzimidazole (PBI)-based polymer, but is not limited thereto.

Specifically, the PBI-based polymer may be a polymer further comprising $C_{6-14}$ aryl or a 5- to 10-membered heteroaryl, which is unsubstituted or substituted with one or more selected from the group consisting of hydroxyl, $C_{1-4}$ alkyl, and a sulfonyl group, linked to the main chain or a side chain of the backbone comprising benzimidazole, that is unsubstituted or N-substituted entirely or partially with $C_{1-4}$ alkyl.

More specifically, the PBI-based polymer may be one selected from the group consisting of meta-PBI, para-PBI, ab-PBI, 2OH-PBI, O-PBI, PBI-OO, PBI-HFA, PBI-OH, sulfonated para-PBI, mesityl-PBI, terphenyl-PBI, hexamethyl-p-terphenyl-PBI, a mixture thereof, or a co-polymer thereof, but is not limited thereto.

The membrane may be a supported membrane that further comprises a porous support. As described, when the porous support is included, a membrane with improved strength may be provided.

The porous support may be a cloth, a non-woven fabric, or a membrane made of one or more kinds of polymers selected from the group consisting of polytetrafluoroethylene (PTFE), polyvinylidene fluoride (PVDF), polypropylene (PP), polyethylene (PE), crosslinked PBI, polyphenylene sulfide (PPS), and polysulfone. The polysulfone may be, for example, a composite material filled with an inorganic additive, *etc.*

When the supported membrane is prepared using the porous support, the step 1 may be performed by i) filling, into pores of the porous support, the solution of polymer comprising one or more amino groups in the backbone, which are dissolved in the phosphoric acid solution; or ii) coating, onto one surface or both surfaces of the porous support, the solution of polymer comprising one or more amino groups in the backbone, which are dissolved in the phosphoric acid solution.

Considering the case of using the membrane as a separator, a membrane having a higher strength may be generally preferred for durability. In this aspect, the supported membrane prepared using the porous support may be advantageous. The supported membrane has improved mechanical strength, as compared with a membrane made of a polymer itself, and thus its tensile strength may be increased by about 2.5 times, and its Young's modulus may be increased by about 5 times or more. On the other hand, conductivity of the supported membrane may be slightly lowered due to non-conductivity of the porous support material, as compared with that of the membrane made of the polymer itself. In contrast, remarkably increased conductivity of the KOH-doped polymer membrane according to the present invention makes up for the lowered conductivity, and thus it may still have high conductivity, as compared with existing commercially available membranes. Furthermore, the supported membrane formed on the porous support may have an increased bubble point, and thus may be used as a separator in systems of higher differential pressure.

A second aspect of the present invention provides a hydroxide ion conductive membrane prepared by the method of the first aspect.

A third aspect of the present invention provides an electrochemical system equipped with the hydroxide ion conductive membrane of the second aspect.

For example, the electrochemical system may be a fuel cell or a battery.

A fourth aspect of the present invention provides an alkaline water electrolyzer equipped with the hydroxide ion conductive membrane of the second aspect as a separator.

In an alkaline water electrolysis reaction, DC electrical power is applied to electrodes to generate oxygen through oxidation at the anode and hydrogen through reduction at the cathode. At this time, hydroxide ions are delivered through KOH electrolytes to complete the entire circuit. In this regard, a separator is provided between the electrodes in order to prevent mixing of generated oxygen and hydrogen while delivering hydroxide ions. The separator used in the alkaline water electrolyzer preferably has strong corrosion resistance to aqueous alkaline solutions. In addition, considering that current density increases and an overvoltage decreases as a reaction temperature increases in the alkaline water electrolyzer, it is preferable to have durability when driven at a high temperature. Since the hydroxide ion conductive membrane prepared by way of the method of the present invention has corrosion resistance to alkaline solutions and/or durability at high temperatures, it may be applied to the separator in the alkaline water electrolyzer.

**[Advantageous Effects]**

According to a method of preparing a hydroxide ion conductive membrane of the present invention, a membrane cast from a polymer solution, in which the polymer is dissolved in a phosphoric acid solution instead of DMAc, is washed with water to remove excess acid, and then immersed in potassium hydroxide without drying to be doped with KOH, thereby providing a membrane with excellent conductivity. A supported membrane formed on a porous support such as PVDF, *etc.* has increased strength as well as resistance to alkaline solutions, and thus may be usefully applied to a separator in alkaline water electrolyzers.

**[Brief Description of Drawings]**

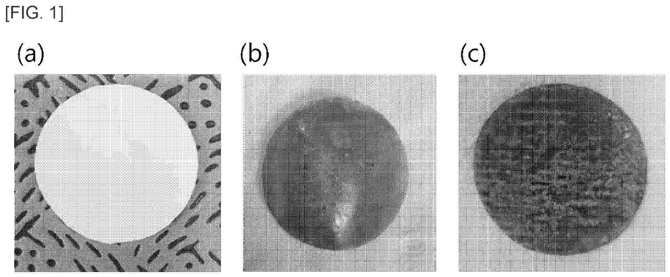

FIG. 1 shows each shape of (a) a porous PVDF membrane itself, (b) a porous PVDF membrane filled with phosphoric acid-doped PBI, and (c) a PVDF membrane filled with phosphoric acid-doped PBI and then further doped with KOH.

**[Detailed Description of the Invention]**

Hereinafter, the present invention will be described in more detail with reference to exemplary embodiments. However, these exemplary embodiments are for illustrative purposes only, and the scope of the present invention is not intended to be limited by these exemplary embodiments.

<Materials>

PBI fibers (mPBI, Mw = 58000) were purchased from Danish Power Systems. Phosphoric acid (PA, ACS reagent, 85%) was purchased from Sigma Aldrich. A PVDF porous film as a support was purchased from Merck Millipore (Durapore Membrane filter DVPP00010, hydrophilic PVDF, pore size of 0.65 $\mu$m, thickness of 125 $\mu$m, porosity of 70%). Aqueous solutions of potassium hydroxide (KOH) were prepared by dissolving KOH flakes (Daejung Chemicals and Metal Co., Ltd.) in deionized water.

**Example 1: Preparation of KOH-doped homogeneous PBI membranes**

3 wt% of mPBI was dissolved in phosphoric acid (PA) in a round-bottom flask equipped with an overhead stirrer and argon gas purging to evaporate water inside the solution. The solution was stirred at 195°C for 19 hours. After full dissolution, the solution was poured onto clean glass plates and cast with an automatic casting machine using a doctor blade. The temperature of the glass plate was 60°C, and the casting thickness was 700 $\mu$m. The solidified film on the plate was rapidly dipped into deionized water and maintained for at least 24 hours. During that time, the water was exchanged several times. The wet thin film was cut and immediately equilibrated in an aqueous potassium hydroxide solution with a concentration of 10 wt%, 15 wt%, 20 wt%, 25 wt%, or 30 wt% for 24 hours at room temperature.

**Example 2: Preparation of 20H-PBI-based KOH-doped membranes**

3,3'-Diaminobenzidine (DAB) (1.514 g, 7.06 mmol), 2,5-dihydroxytherephthalic acid (2OH-TA) (1.400 g, 7.06 mmol), and 95 g of poly(phosphoric acid) (ca. 115% phosphoric acid, PPA) were placed in a 250 mL round-bottom flask equipped with an overhead stirrer and argon gas purging. The solution was stirred at 140°C for 3 hours, and the temperature was raised to 195°C. Then, the polymerization was conducted for 13 hours at 195°C. After the final stage of polymerization, the temperature was raised to 220°C for film casting. The thin film was moved to a humidity-controlled chamber where the PPA in the membrane was hydrolyzed to phosphoric acid (PA) under conditions of 55% RH 27°C for 24 hours, followed by soaking in deionized water for another 24 hours to remove excess PA.

The membrane was cut to circular samples (d=2.5 cm), immersed in a KOH solution for 24 hours to prepare a KOH-doped membrane, followed by characterization. As a result, the 25 wt% KOH-doped membrane showed conductivity of 736 mS/cm.

**Example 3: Preparation of porous PVDF supported membrane comprising KOH-doped homogeneous PBI**

A PVDF porous thin film was immersed in a fully dissolved 3 wt% mPBI solution in phosphoric acid at 150°C for 1 hour. The pore-filled membrane was wiped with tissue paper to remove excess mPBI solution on the surface of the membrane, and then immersed in deionized water for at least 24 hours with replacement of water three or four times. Thereafter, the wet pore-filled membrane was equilibrated in a potassium hydroxide solution, as described above in Example 1. Changes of the PVDF membrane itself as a support, the supported membrane of which pores were filled with phosphoric acid-doped mPBI, and the supported membrane finally doped with KOH were observed with the naked eye, and were photographed and shown in FIG. 1.

**Example 4: Preparation of porous PTFE supported membrane comprising KOH-doped homogeneous PBI**

A PTFE porous film was immersed in fully dissolved 3 wt% mPBI solution in phosphoric acid (PA) at 150 °C for 1 hour. The pore-filled membrane was wiped with tissue paper to remove excess mPBI solution on the surface of the membrane, and then immersed in deionized water for at least 24 h with several refreshments. After that, the wet pore-filled membrane was equilibrated in aqueous potassium hydroxide solution.

**Experimental Example 1: Conductivity measurements**

Conductivity values of KOH-doped membranes were obtained by impedance spectroscopy. In detail, the membranes were fixed between two gaskets, leaving an active area of 1.767 cm$^2$. The gap between electrodes (gold-coated copper disc) was 1.59 mm and filled with a KOH solution used for doping. The resistance of the membrane was obtained by plotting at least three resistances of stacked membranes against their thicknesses, assuming that the interfacial resistance between two membranes is negligible. As a result, a linear trend was obtained, and conductivity ($\sigma_m$) was calculating according to the following equation (wherein slope is the slope of the linear trend (resistance/cm):

$$\sigma_m = \frac{1}{slope \text{ X } electrode\ area}$$

[Table 1]

| Section | Polymer | Casting solvent | Intermediate step | Final doping | Conductivity (mS/cm) | Reference |
|---|---|---|---|---|---|---|
| Comparative Example | mPBI | DMAc | - | 2 M sulfuric acid | 6 | KR 10-2020-0035830 |
| Comparative Example | mPBI | DMAc | 85wt% phosphoric acid | 2 M sulfuric acid | 17 | RSC Adv., 6: 23479-23488 (2016) |
| Comparative Example | mPBI | DMAc | 4 M KOH | 2 M sulfuric acid | 56 | KR 10-2020-0035830 |

(continued)

| Section | Polymer | Casting solvent | Intermediate step | Final doping | Conductivity (mS/cm) | Reference |
|---|---|---|---|---|---|---|
| Comparative Example | Sulfonated pPBI | Poly (phosphoric acid) | - | 2 M sulfuric acid | 593 | JES, 166(8): A1449-A1455 (2019) |
| Comparative Example | No membrane | | - | 25 wt% KOH | 650 | Int. J. Hydrog. Energy, 32 (3): 359-364 (2007) |
| Comparative Example | mPBI | DMAc | - | 4 M KOH | 43 | J. Membr. Sci., 610(1): 118254 (2020) |
| Example | mPBI | 85 wt% phosphoric acid | Water | 25 wt% KOH | 537 | The present invention |
| Example | Porous PVDF supported mPBI | 85 wt% phosphoric acid | Water | 25 wt% KOH | 173-311 | The present invention (different batches, with slightly different preparation procedures) |
| Example | 2OH-PBI | 85 wt% phosphoric acid | Water | 25 wt% KOH | 737 | The present invention |
| Example | 2OH-PBI | 115 wt% PPA | Water | 25 wt% KOH | 736 | The present invention |
| Comparative Example | ZIRFON | NA | - | 25 wt% KOH | 204 | The present invention |

**Experimental Example 2: Mechanical properties**

Mechanical properties of membranes were determined with a Cometech Universal Material Testing Machine (model QC-508E). Doped membranes were cut manually, and for each doped membrane, at least 5 samples were tested. The size of the specimen was 10 mm in width, and the gap length between the grips was 30 mm in minimum. The thickness of membranes depended on the doping state and was in the range of 150 $\mu$m to 200 $\mu$m. The temperature was 23°C to 25°C, and the relative humidity was 60% to 65%. The maximum load of the machine was 50 N, and the crosshead speed was 10 mm·min$^{-1}$.

[Table 2]

| Section | | KOH concentration in doping bath (wt%) | Tensile strength (MPa) | Young's Modulus (MPa) | Elongation at break (%) | Toughness (MPa) |
|---|---|---|---|---|---|---|
| Comparative Example | Membrane cast from DMAc and doped with KOH solution | 25 | 20 | 700 | - | - |
| Example | Membrane cast from phosphoric acid solution, treated with water, and doped with KOH | 10 | 1.40±0.11 | 14.8±2.3 | 90.4±35.8 | 0.65±0.39 |
| | | 15 | 1.90±0.10 | 17.3±0.7 | 145.7±17.5 | 1.55±0.22 |
| | | 20 | 1.92±0.27 | 19.6±9.2 | 104.2±38.4 | 0.98±0.43 |
| | | 25 | 2.24±0.43 | 18.8±1.2 | 122.3±43.8 | 1.47±0.78 |
| | | 30 | 2.25±0.03 | 23.1±1.8 | 142.3±4.4 | 1.59±0.03 |

(continued)

| Section | | KOH concentration in doping bath (wt%) | Tensile strength (MPa) | Young's Modulus (MPa) | Elongation at break (%) | Toughness (MPa) |
|---|---|---|---|---|---|---|
| Example | PVDF pore filled membrane: cast from phosphoric acid solution, treated with water, and doped with KOH | 25 | $5.50\pm0.40$ | $104.9\pm6.9$ | $31.2\pm1.5$ | $0.71\pm0.04$ |
| Example | PTFE pore filled membrane: cast from phosphoric acid solution, treated with water, and doped with KOH | 25 | $32.2\pm2.5$ | $79.9\pm4.9$ | $96.0\pm4.0$ | $9.63\pm0.56$ |

In general, materials having higher tensile strength are preferred. However, even though the membranes cast in phosphoric acid have relatively low tensile strength, they exhibit high elongation at break, whereby the low tensile strength may be compensated.

Based on the above description, it will be understood by those skilled in the art that the present invention may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within metes and bounds of the claims, or equivalents of such metes and bounds, are therefore intended to be embraced by the claims.

**Claims**

1. A method of preparing a hydroxide ion conductive membrane, the method comprising:

   a step 1 of preparing a membrane from a solution of polymer comprising one or more amino groups in the backbone, which are dissolved in a phosphoric acid solution; and
   a step 2 of immersing the membrane in a potassium hydroxide solution.

2. The method of claim 1, wherein the phosphoric acid solution has a concentration of 50 wt% to 115 wt%.

3. The method of claim 1 or 2, further comprising a step 1-1 of washing with water after the step 1.

4. The method of claim 3, not comprising a step of drying between the step 1-1 and the step 3.

5. The method of one of claims 1 to 4, wherein the polymer comprising amino groups in the backbone is a polybenzimidazole (PBI)-based polymer.

6. The method of claim 5, wherein the PBI-based polymer further comprises $C_{6-14}$ aryl or a 5- to 10-membered heteroaryl, which is unsubstituted or substituted with one or more selected from the group consisting of hydroxyl, $C_{1-4}$ alkyl, and a sulfonyl group, linked to the main chain or a side chain of the backbone comprising benzimidazole, that is unsubstituted or N-substituted entirely or partially with $C_{1-4}$ alkyl.

7. The method of claim 5, wherein the PBI-based polymer is one selected from the group consisting of meta-PBI, para-PBI, ab-PBI, 2OH-PBI, O-PBI, PBI-OO, PBI-HFA, PBI-OH, sulfonated para-PBI, mesityl-PBI, terphenyl-PBI, hexamethyl-p-terphenyl-PBI, a mixture thereof, or a co-polymer thereof.

8. The method of one of claims 1 to 7, wherein the membrane is a supported membrane that further comprises a porous support.

9. The method of claim 8, wherein the porous support is a cloth, a non-woven fabric, or a membrane made of one or more kinds of polymers selected from the group consisting of polytetrafluoroethylene (PTFE), polyvinylidene fluoride (PVDF), polypropylene (PP), polyethylene (PE), crosslinked PBI, polyphenylene sulfide (PPS), and polysulfone.

10. The method of claim 8 or 9, wherein the step 1 is performed by i) filling, into pores of the porous support, the solution of polymer comprising one or more amino groups in the backbone, which are dissolved in the phosphoric acid solution; or ii) coating, onto one surface or both surfaces of the porous support, the solution of polymer comprising one or more amino groups in the backbone, which are dissolved in the phosphoric acid solution.

11. A hydroxide ion conductive membrane prepared by the method of any one of claims 1 to 10.

12. An electrochemical system equipped with the hydroxide ion conductive membrane of claim 11.

13. The electrochemical system of claim 12, wherein the electrochemical system is a fuel cell or a battery.

14. An alkaline water electrolyzer equipped with the hydroxide ion conductive membrane of claim 11 as a separator.

[FIG. 1]

(a)

(b)

(c)

Europäisches
Patentamt

European
Patent Office

Office européen
des brevets

## EUROPEAN SEARCH REPORT

**Application Number**

EP 21 20 5368

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/087473 A1 (MURDOCK LAURA A [US] ET AL) 19 March 2020 (2020-03-19) * the whole document * ----- | 1-14 | INV. C25B9/19 C25B13/08 H01M8/00 B01D67/00 |
| X | US 2020/091536 A1 (BENICEWICZ BRIAN C [US] ET AL) 19 March 2020 (2020-03-19) * the whole document * ----- | 1-14 | |
| X | EP 3 703 166 A1 (ZENTRUM FUER BRENNSTOFFZELLEN TECHNIK GMBH [DE] ET AL.) 2 September 2020 (2020-09-02) * the whole document * ----- | 1-14 | |
| A | US 2010/216051 A1 (UENSAL OEMER [DE] ET AL) 26 August 2010 (2010-08-26) * paragraph [0118] * ----- | 1-14 | |

**TECHNICAL FIELDS SEARCHED (IPC)**

C25B
H01M
B01D

The present search report has been drawn up for all claims

| Place of search | Date of completion of the search | Examiner |
|---|---|---|
| Munich | 12 April 2022 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5368

12-04-2022

| Patent document cited in search report | | Publication date | Patent family member(s) | | Publication date |
|---|---|---|---|---|---|
| US 2020087473 | A1 | 19-03-2020 | CN | 112823182 A | 18-05-2021 |
| | | | EP | 3850035 A1 | 21-07-2021 |
| | | | JP | 2022501463 A | 06-01-2022 |
| | | | KR | 20210064265 A | 02-06-2021 |
| | | | US | 2020087473 A1 | 19-03-2020 |
| | | | US | 2022064391 A1 | 03-03-2022 |
| | | | WO | 2020060857 A1 | 26-03-2020 |
| US 2020091536 | A1 | 19-03-2020 | CN | 112955498 A | 11-06-2021 |
| | | | EP | 3850697 A1 | 21-07-2021 |
| | | | JP | 2022501766 A | 06-01-2022 |
| | | | KR | 20210057115 A | 20-05-2021 |
| | | | US | 2020091536 A1 | 19-03-2020 |
| | | | WO | 2020056275 A1 | 19-03-2020 |
| EP 3703166 | A1 | 02-09-2020 | NONE | | |
| US 2010216051 | A1 | 26-08-2010 | CA | 2500792 A1 | 22-04-2004 |
| | | | CN | 1742402 A | 01-03-2006 |
| | | | DE | 10246461 A1 | 15-04-2004 |
| | | | EP | 1559164 A2 | 03-08-2005 |
| | | | JP | 2006502266 A | 19-01-2006 |
| | | | JP | 2011089123 A | 06-05-2011 |
| | | | KR | 20050073476 A | 13-07-2005 |
| | | | US | 2006078774 A1 | 13-04-2006 |
| | | | US | 2010216051 A1 | 26-08-2010 |
| | | | WO | 2004034500 A2 | 22-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101293196
- KR 1020200035830

**Non-patent literature cited in the description**

- *RSC Adv.,* 2016, vol. 6, 23479-23488
- *JES,* 2019, vol. 166 (8), 1449-1455
- Int. J. Hydrog. *Energy,* 2007, vol. 32 (3), 359-364
- *J. Membr. Sci.,* 2020, vol. 610 (1), 118254